Europäisches Patentamt

European Patent Office

Office européen des brevets

(19)

(11) Veröffentlichungsnummer : **0 154 930**
**B1**

(12) # EUROPÄISCHE PATENTSCHRIFT

(45) Veröffentlichungstag der Patentschrift :
20.09.89

(21) Anmeldenummer : 85102505.6

(22) Anmeldetag : 06.03.85

(51) Int. Cl.⁴ : **H 02 K 11/00**, H 02 K 5/22,
B 60 S 1/08

(54) Elektromotor, insbesondere Wischermotor für Kraftfahrzeuge.

(30) Priorität : 16.03.84 DE 3409680

(43) Veröffentlichungstag der Anmeldung :
18.09.85 Patentblatt 85/38

(45) Bekanntmachung des Hinweises auf die Patenterteilung : 20.09.89 Patentblatt 89/38

(84) Benannte Vertragsstaaten :
FR GB IT

(56) Entgegenhaltungen :
DE--A-- 2 646 886
DE--A-- 2 707 288
DE--U-- 7 640 505
GB--A-- 2 079 540
GB--A-- 2 104 732
US--A-- 4 350 938

(73) Patentinhaber : SWF Auto-Electric GmbH
Stuttgarter Strasse 119 Postfach 135
D-7120 Bietigheim-Bissingen (DE)

(72) Erfinder : Kohler, Alfred·
Hans-Voetler-Weg 5
D-7120 Bietigheim-Bissingen (DE)
Erfinder : Schneider, Theodor
Seestrasse 30
D-7121 Freidental/Württ (DE)
Erfinder : Schubert, Karl-Friedrich
Friedrich-Naumann-Strasse 10
D-7120 Bietingheim-Bissingen (DE)

**Beschreibung**

Die Erfindung bezieht sich auf einen Elektromotor gemäß den Merkmalen des Oberbegriffs des Anspruchs 1.

Aus der DE-AS 26 58 746 oder der DE-OS 32 20 191 ist ein Elektromotor bekannt, bei dem an einem Gehäusedeckel ein Steckergehäuse befestigt ist, in dem parallel nebeneinander Steckkontakte zum Anschluß eines Gegensteckers festgelegt sind. Dabei sind diese Steckkontake als Flachstecker ausgebildet und im wesentlichen parallel zum Deckel angeordnet. An einzelnen Steckkontakten sind innerhalb des Getriebegehäuses Schaltfedern für einen Endlagenschalter fixiert. Die Steckkontakte für die Motorstromzuleitungen liegen ebenfalls im wesentlichen parallel zum Deckel, wobei die Motorstromzuleitungen in Steckrichtung an das Ende dieser Flachstecker angelötet sind. Alle Steckkontakte sind unlösbar am Deckel fixiert.

Manche Automobilhersteller verlangen jedoch, daß die Steckkontakte als runde Steckstifte bzw. Steckhülsen ausgebildet sein sollen, wobei üblicherweise die Zuleitungen zu diesen Steckstiften quer zur Steckrichtung in eine Bohrung des Steckstiftes hineinragen. Mit solchen runden Steckkontakten kann eine Konstruktion nach der DE-AS 26 58 746 so ohne weiteres nicht realisiert werden. Man hat daher bisher am Motorgehäuse Lötstützpunkte vorgesehen, an denen ein Kabelsatz fixiert wird, der in ein separates Steckergehäuse führt, in dem die runden Steckkontakte festgelegt sind. Diese Konstruktion ist in der Herstellung und der Montage sehr aufwendig.

Der Erfindung liegt daher die Aufgabe zugrunde, einen Elektromotor der eingangs erwähnten Art so weiterzubilden, daß er ohne großen fertigungstechnischen Aufwand mit einem Gegenstecker mit runden Steckhülsen bzw. Steckstiften verbindbar ist. Diese Aufgabe wird erfindungsgemäß mit den kennzeichnenden Merkmalen des Anspruchs 1 gelöst.

Die Erfindung geht dabei von der Überlegung aus, daß eine kostengünstige Herstellung und Montage nur dann gegeben ist, wenn man die Schaltfedern wie bisher unmittelbar an den runden Steckstiften bzw. Steckhülsen anschlagen kann. Dies ist aber nicht möglich, wenn diese Steckstifte bzw. Steckhülsen parallel zum Deckel festgelegt werden, weil diese Steckstifte bzw. Steckhülsen meist als Drehteil ausgebildet sind und daher keinen rechtwinkligen abstehenden Ansatz aufweisen, der den Deckel durchdringen könnte. Gemäß einem wesentlichen Merkmal der vorliegenden Erfindung werden daher diese runden Steckstifte bzw. Steckhülsen senkrecht am Deckel befestigt, weil dann ein verlängerter Abschnitt dieser runden Steckkontakte ohne große Probleme den Deckel durchdringen kann, so daß an deren Stirnflächen unmittelbar die Schaltfedern festgelegt werden können. Ein wesentliches Merkmal der vorliegenden Erfindung ist also darin zu sehen, daß die Steckrichtung gegenüber den bekannten Ausführung verändert wird.

Bei der eingangs erwähnten bekannten Ausführung sind alle Steckkontakte unlösbar in dem Steckergehäuse festgelegt, das seinerseits unlösbar an den Metalldeckel angespritzt ist. Eine solche Ausführung wäre auch mit runden Steckstiften bzw. Steckhülsen denkbar. Dabei muß jedoch berücksichtigt werden, daß bei derartigen runden Steckstiften bzw. Steckhülsen die Motorstromzuleitung meist nicht in Steckrichtung angelötet werden kann, wie das bei den Flachsteckern der Fall ist. Verwendet man solche handelsüblichen Steckstifte bzw. Steckhülsen mit einer Querbohrung für die Motorstromzuleitung, könnte man diese runden Steckkontakte am Deckel so festlegen, daß sie ebenfalls durch eine Bohrung im Getriebegehäuse in den Gehäuseinnenraum geführt sind und dort mit den Motorstromzuleitungen verbunden sind. Diese Motorstromzuleitungen müssen dann jedoch durch eine Bohrung im Getriebegehäuse wieder nach geführt werden, was umständlich ist.

Diese Nachteile werden vermieden, wenn gemäß einem weiteren Merkmal der Erfindung die Steckstifte bzw Steckhülsen für die Motorstromzuleitungen an einem Bauteil geführt sind, das lösbar auf der Deckelaußenseite festlegbar ist. Damit können handelsübliche Steckstifte bzw. Steckhülsen verwendet werden, an denen in üblicher Weise die Motorstromzuleitungen radial abstehend angelötet sind. Die bereits mit den Motorstromzuleitungen versehenen Steckstifte werden dann in diesem separaten Bauteil festgelegt und mit diesem zusammen auf dem Getriebegehäuse fixiert.

Es sind zwar bereits Elektromotore mit senkrecht von einem Gehäuseteil abstehenden Rundsteckern bekannt, wie die GB-PS 2 065 987 oder die DE-OS 32 26 174 zeigen. Diese Ausführungen haben jedoch einen völlig anderen Aufbau als die Motoren der vorliegenden Erfindung. Insbesondere besteht bei diesen Ausführungen nicht das Problem, an den Steckkontakten einerseits Schaltfedern und andererseits Motorstromzuleitungen anzubringen, wobei die Schaltfedern innerhalb, die Motorstromzuleitungen aber außerhalb des Gehäuseteils liegen. Bei diesen bekannten Ausführungen sind daher auch keine lösbar an einem Gehäuseteil gehaltenen Steckkontakte erkennbar.

Dabei kann dieses separate Bauteil mit den Steckstiften für die Motorstromzuleitungen völlig unabhängig von den Steckstiften für die Schaltfedern am Gehäusedeckel festgelegt sein. Dann ist jedoch wegen Toleranzabweichungen die Verwendung eines einstückigen Gegensteckers für alle Steckstifte nicht möglich. Deshalb wird gemäß einer besonders bevorzugten Weiterbildung der Erfindung vorgeschlagen, daß dieses Bauteil mehrere Bohrungen aufweist, wobei in einigen Bohrungen die Steckstifte für die Motorstromzuleitungen geführt sind und wobei durch andere Bohrungen dieses Bauteils die unlösbar am Deckel festgelegten Steckstifte hindurchragen. Auf diese Weise wird gewährleistet, daß die Lage aller Steckstifte bzw. Steckhülsen der Anordnung der entsprechenden Steckhülsen bzw. Steckstifte am Gegenstecker entspricht, so daß ein einstückiger Gegenstecker ohne Schwierigkeiten verwendbar ist.

An sich ist die relative Lage der Steckstifte für die Motorstromzuleitungen und der Steckstifte für die Schaltfedern beliebig wählbar, doch wird einer Ausführung gemäß den Merkmalen des Anspruchs 3 der Vorzug gegeben. Dabei liegen die Steckstifte für die Schaltfedern alle in einer Reihe, so daß in üblicher Weise die daran fixierten Schaltfedern relativ zu einer sich drehenden Schaltscheibe ausgerichtet werden können. Die Steckstifte für die Motorstromzuleitungen sind in einer zweiten Reihe von Bohrungen festgelegt.

Die unlösbare Befestigung der Steckstifte am Getriebedeckel ist natürlich dann besonders einfach, wenn dieser Deckel aus Kunststoff gefertigt wird. Aber auch bei Verwendung eines aus einer Metallplatine ausgestanzten Deckels kann man die Steckstifte einfach befestigen, wenn man die Bohrungen in dieser Metallplatine mit Isolierhülsen auskleidet und in diese Isolierhülsen die Steckstifte mit einem Führungsabschnitt einsetzt. Wenn man dann die Steckstifte mit einem im Durchmesser vergrößerten Anschlagbund zwischen dem Führungsabschnitt und dem eigentlichen Steckabschnitt ausrüstet und die Schaltfedern an der freien Stirnfläche des Führungsabschnittes radial abstehend befestigt, ist der Steckstift ohne zusätzliche Maßnahmen am Getriebegehäusedeckel fixiert. Der Anschlagbund stützt sich dann auf der einen Seite der Isolierhülse und die Schaltfeder auf der anderen Seite dieser Isolierhülse ab.

Dabei wird man vorzugsweise alle Isolierhülsen einstückig mit einem Unterteil eines Steckergehäuses an die Metallplatine anspritzen, wobei dieses Unterteil Rastelemente aufweist, die zur Verrastung des separaten Bauteils dienen, das folglich als Oberteil eines Steckergehäuses anzusehen ist. Dieses Oberteil ist kastenartig ausgebildet, wobei die Grundfläche im Abstand von dem Unterteil gehalten wird. Die Steckstifte für die Motorstromzuleitungen haben ebenfalls einen Anschlagbund, der sich einerseits an der Grundfläche des Oberteils und andererseits an einem Auflagesteg am Unterteil abstützt. Damit werden die Steckstifte für die Motorstromzuleitungen mit dem Verrasten des Oberteils indirekt am Deckel festgelegt.

Die Erfindung und weitere vorteilhafte Ausgestaltungen werden nachfolgend anhand der in der Zeichnung dargestellten Ausführungsbeispiele näher erläutert.

Es zeigen :

Fig. 1 eine Ansicht auf einen Wischermotor,

Fig. 2 eine Ansicht auf den Getriebegehäusedeckel,

Fig. 3 einen Schnitt entlang der Schnittlinie III,

Fig. 4 einen Teilschnitt entlang der Schnittlinie

IV,

Fig. 5 eine Ansicht auf die Rückseite des Getriebegehäusedeckels,

Fig. 6 eine perspektivische Ansicht auf ein Oberteil eines Steckergehäuses.

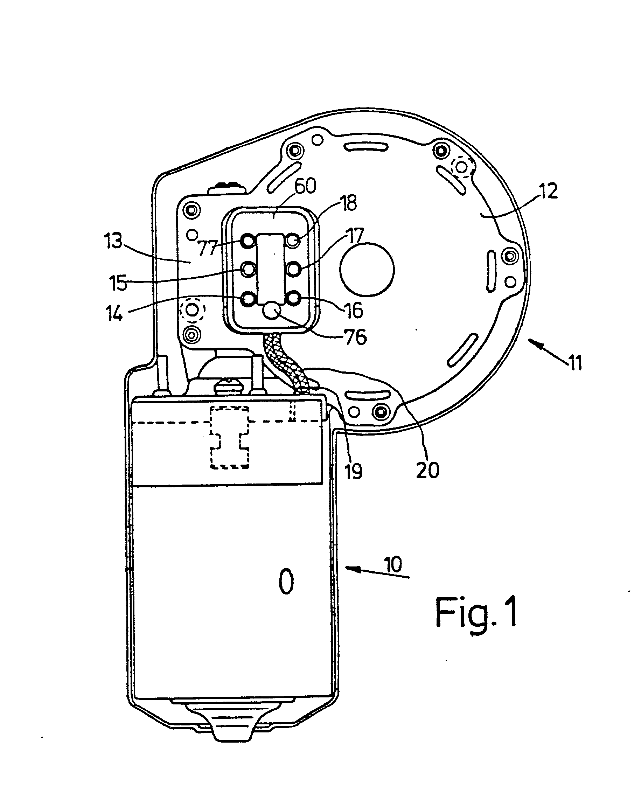

Fig. 1 zeigt einen Wischermotor mit einem eigentlichen Motorgehäuse 10 und einem in bekannter Weise daran angeflanschten Getriebegehäuse 11, das in ebenfalls bekannter Weise durch einen aus einer Metallplatine ausgestanzten Deckel 12 abgeschlossen ist. Der Deckel 12 ist im wesentlichen kreisrund, hat jedoch einen rechteckigen Ansatz 13 oberhalb der nicht dargestellten Ankerwelle des Motors. Aus Fig. 1 ist erkennbar, daß an dem Deckel 12 insgesamt fünf Steckstifte 14, 15, 16, 17 und 18 befestigt sind, wobei an die Steckstifte 14 und 15 die Motorstromzuleitung 19 und 20 angeschlossen sind. Diese Steckstifte 14 und 15 sind im Bereich dieses rechteckigen Ansatzes 13 angeordnet, während die übrigen Steckstifte 16, 17 und 18 für die Schaltfedern im Bereich des kreisrunden Deckelteils liegen. Diese Anordnung ist gewählt, weil dann nur kurze Motorstromzuleitungen notwendig sind.

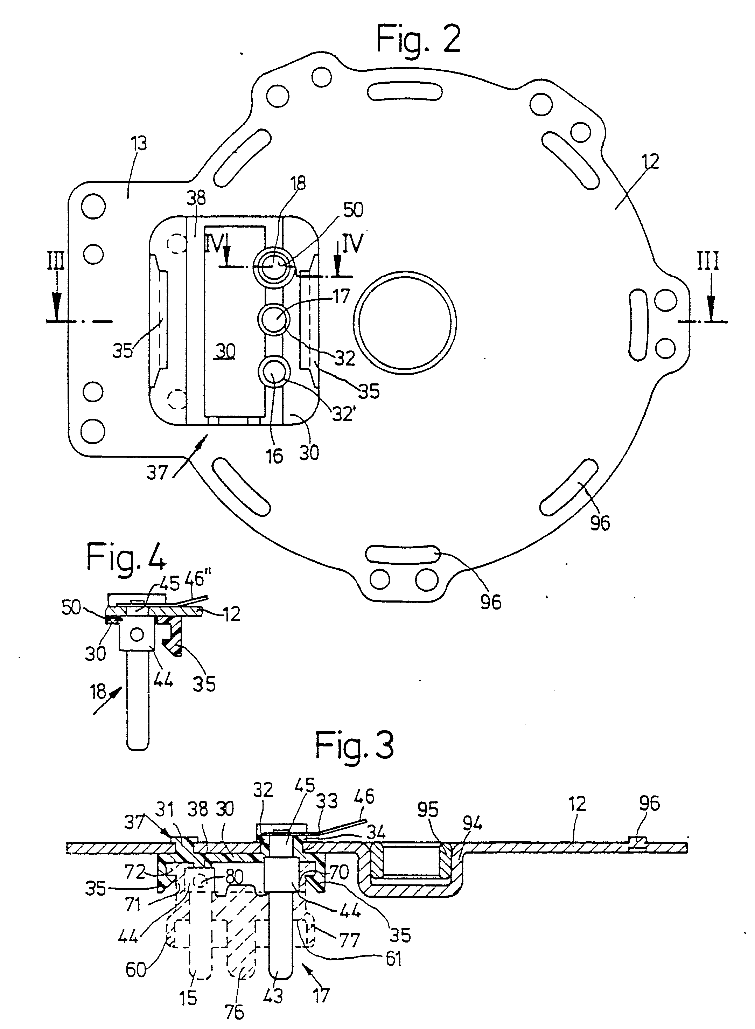

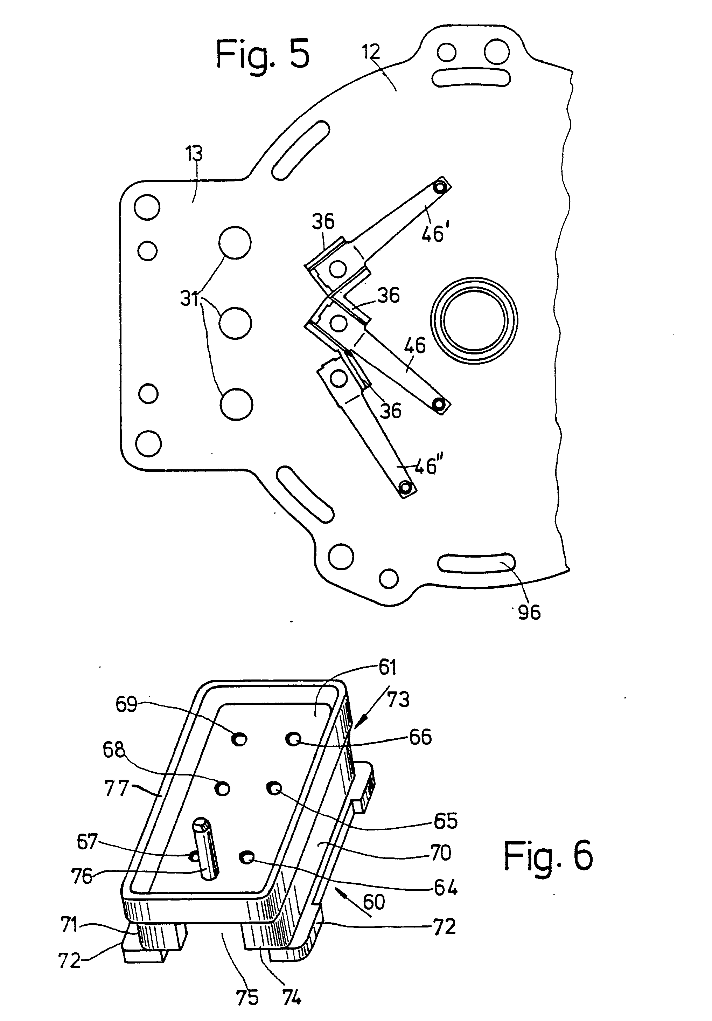

An die Außenseite des metallischen Deckels ist eine im wesentlichen rechteckige Platte 30 aus Kunststoff angespritzt. In Fig. 3 erkennt man Haltewarzen 31, die in bekannter Weise Bohrungen im Deckel 12 durchdringen. An die Platte 30 sind außerdem einstückig Isolierhülsen 32 angeformt, die Bohrungen 33 im Deckel 12 auskleiden. Diese Isolierhülsen haben auf der Deckelrückseite einen umlaufenden Flansch 34 und dienen damit ebenfalls zur Verankerung der Platte 30 an dem Deckel 12. Außerdem sind an diese Platte 30 beidseitig Rastelemente 35 angeformt. Schließlich zeigt Fig. 5, daß auf der Deckelrückseite Isolierstege 36 angespritzt sind, deren Funktion später erläutert wird. Die Teile 30 bis 36 sind einstückig aus Kunststoff an den Deckel 12 angespritzt. Dieses Bauteil kann auch als Unterteil 37 eines Steckergehäuses angesehen werden.

Als Steckkontakte sind bei der vorliegenden Erfindung runde Steckstifte 16, 17 und 18 vorgesehen. Anstelle dieser Steckstifte könnten natürlich auch Steckhülsen treten. Der Steckstift 17 hat einen eigentlichen Steckabschnitt 43 für eine Steckhülse eines nicht näher dargestellten Gegensteckers. An diesen Steckabschnitt 43 schließt sich ein im Durchmesser vergrößerter Anschlagbund 44 an. Ein Führungsabschnitt 45 durchdringt die Isolierhülse 32. An der freien Stirnfläche dieses Führungsabschnitts 45 ist eine Schaltfeder 46 radial abstehend angenietet. Dabei stützt sich der Anschlagbund 44 auf der Platte 30 ab, während die Schaltfeder 46 sich als Gegenlager auf dem Flansch 34 der Hülse abstützt. Mit dem Festnieten der Schaltfeder 46 wird also zugleich der Steckstift 17 unlösbar am Deckel 12 fixiert. Er steht, wie Fig. 3 deutlich zeigt, senkrecht von diesem Deckel ab.

Fig. 4 zeigt einen Schnitt im Bereich eines Steckstiftes 18, der unmittelbar am metallischen Deckel 12 vernietet und mit diesem elektrisch leitend verbunden ist. Dazu hat die Platte 30 eine Bohrung 50, deren Durchmesser größer ist als der Durchmesser des Anschlagbundes 44, der somit unmittelbar am Deckel anliegt. Ein kurzer Führungsabschnitt 45 an dem Steckstift 18 liegt bündig in einer Bohrung des Deckels und die Schaltfeder 46 « liegt unmittelbar auf der Deckelrückseite an. Wiederum ist durch das Annieten der Schaltfeder 46 » dieser Steckstift 18 unlösbar am Deckel 12 verankert.

Aus Fig. 2 ist entnehmbar, daß an der Platte 30 zwei Isolierhülsen 32 und 32' in einer Reihe mit der vergrößerten Bohrung 50 angeordnet sind. In den Isolierhülsen 32 und 32' stecken die Steckstifte 16 bzw. 17, an denen auf der Rückseite die Schaltfedern 46 und 46' festgelegt sind. Eine weitere Schaltfeder 46" ist an dem runden Steckstift 18 festgelegt. Die Isolierstege 36 dienen dabei zum Verdrehschutz dieser Steckstifte 16, 17' bzw. 18.

Insgesamt ist also insoweit festzustellen, daß die Steckkontakte für die Schaltfedern als runde Steckstifte ausgebildet sind, daß diese Steckstifte annähernd senkrecht vom Deckel abstehen und unlösbar an diesem befestigt sind, daß die Steckstifte für die Schaltfedern den Deckel durchdringen und daß die Schaltfedern unmittelbar an diesen Steckstiften fixiert sind.

Die Steckstifte 14 und 15 für die Motorstromzuleitungen sind dagegen nicht unmittelbar an dem Deckel 12 festgelegt. Vielmehr ist dazu ein separates Bauteil 60 aus Kunststoff vorgesehen, das in Fig. 6 perspektivisch dargestellt ist. Dieses Bauteil kann als Oberteil eines Steckergehäuses angesehen werden. Dieses Oberteil ist insgesamt kastenartig ausgebildet und hat eine rechteckige Grundfläche 61 mit sechs Bohrungen 64 bis 69, von denen jeweils drei in einer Reihe angeordnet sind. Von dieser Grunfläche 61 stehen zwei Längswände 70 und 71 ab, die — wie Fig. 3 zeigt — jeweils einen abstehenden Steg 72 zur Verrastung mit den Rastelementen 35 am Unterteil 37 aufweisen. Außerdem hat dieses Oberteil 70 zwei Querwände 73 und 74, wobei in die Querwand 74 eine Aussparung 75 eingearbeitet ist. Von der Grundfläche 61 steht außerdem ein Stift 76 ab, der in eine entsprechende Aufnahme des Gegensteckers eingreift, so daß dieser nur in einer definierten Lage auf die Steckstifte aufgesetzt werden kann. Schließlich steht von dieser Grundfläche 61 auch ein umlaufender Kragen 77 ab, der als Führungsfläche für den Gegenstecker dient.

In diesem Oberteil 60 sind die Steckstifte 14 und 15 für die Motorstromzuleitungen 19 und 20 festgelegt. Wie Fig. 3 zeigt, haben diese Steckstifte lediglich einen Anschlagbund 44, der sich einerseits an der Grundfläche 61 und andererseits an einem Steg 38 des Unterteils 37 abstüzt. Der Anschlagbund 44 dieser Steckstifte 14 und 15 wird von einer Bohrung 80 durchsetzt, in die die Motorstromzuleitung eingesteckt und dort verlötet ist. Die Motorstromzuleitungen werden durch die Aussparung 75 in der Querwand 74 des Oberteils 60 nach außen geführt.

Bei der Montage werden zunächst die Steckstifte 16, 17 und 18 in den bereits mit einem Unterteil 37 ausgerüsteten Deckel 12 eingesteckt. Dann werden die Schaltfedern an diesen Steckstiften vernietet. Die von der Bürstentragplatte des Motors kommenden Motorstromzuleitungen sind bereits mit den Steckstiften 14 und 15 verlötet. Diese Steckstifte werden in die entsprechenden Bohrungen des Oberteils 60 eingesteckt und danach wird dieses Oberteil mit dem Unterteil verrastet.

Insgesamt ist also festzustellen, daß bei dieser bevorzugten Ausführung nur die Steckstifte für die Schaltfedern unlösbar am Deckel fixiert sind, während die Steckstifte für die Motorstromzuleitungen an einem separaten Bauteil geführt sind, das lösbar auf der Deckelaußenseite festlegbar ist. Dabei durchdringen die Steckstifte für die Schaltfedern und die Steckstifte für die Motorstromzuleitungen Bohrungen in einem einstückig gefertigen Oberteil, so daß deren relative Lage zueinander eindeutig festgelegt ist. Die Steckstifte 16, 17 und 18 für die Schaltfedern liegen in den Bohrungen 64, 65 und 66, die alle in einer ersten Reihe am Oberteil 60 angeordnet sind. Die Steckstifte 14 und 15 für die Motorstromzuleitungen durchdringen die Bohrungen 67 und 68 in einer zweiten Reihe. Die Bohrung 69 im Oberteil 60 bleibt bei dem gezeichneten Ausführungsbeispiel frei.

Die Schaltfedern 46 arbeiten üblicherweise mit Kontaktbahnen einer Schaltscheibe zusammen, die auf der Abtriebswelle befestigt ist. Es ist daher wichtig, daß der Deckel 12 genau in Bezug auf die Abtriebswelle bzw. die Schaltscheibe ausgerichtet wird. Dazu sind am Deckel 12 konzentrisch zu dem in einer Deckeleinbuchtung 94 sitzenden Lager 95 Ansätze 96 ausgeprägt, die genau bündig in den zylindrischen Rand des Getriebegehäuses hineinpassen. Der zylindrische Rand des Getriebegehäuses ist genau koaxial zu der entsprechenden Lageraufnahme in dem Getriebegehäuse. Da auch die Ansätze 96 und die Ausbuchtung 94 im Deckel in einem Arbeitsvorgang hergestellt werden können und damit eine einwandfreie konzentrische Lage gewährleistet ist, ist später der Deckel ohne zusätzliche Maßnahmen sehr exakt in Bezug zu dem Getriebegehäuse ausgerichtet. Das Lager im Getriebegehäuse und das Lager 95 im Deckel fluchten genau zueinander. Damit ist auch gewährleistet, daß die Schaltfeder 46 genau auf die Kontaktbahnen der Schaltscheibe zeigen.

**Patentansprüche**

1. Elektromotor, insbesondere Wischermotor für Kraftfahrzeuge, mit einem Getriebegehäuse (10) und einem dieses Getriebegehäuse abschließenden Deckel (12), von dessen Außenseite mehrere Steckkontakte (14-18) zum Anschluß eines Gegensteckers abstehen, wobei an einzelnen, unlösbar am Deckel fixierten Steckkontakten innerhalb des Getriebegehäuses Schaltfedern (46, 46') fixiert sind und wenigstens ein anderer Steckkontakt mit einer Motorstromzuleitung verbunden ist, dadurch gekennzeichnet, daß alle Steckkontakte als runde Steckstifte (14, 15, 16, 17, 18) bzw. Steckhülsen ausgebildet sind, daß diese Steckstifte (14, 15, 16, 17, 18) bzw. Steckhülsen wenigstens annähernd senkrecht vom Deckel (12) abstehen und daß der Steckstift (14, 15) bzw. die Steckhülse für die Motorstromzuleitung (19, 20) an einem Bauteil (60) geführt ist, das lösbar auf der Außenseite des Deckels (12) festlegbar ist.

2. Elektromotor nach Anspruch 1, dadurch gekennzeichnet, daß das Bauteil (60) mehrere Bohrungen (64, 65, 66, 67, 68, 69) aufweist, daß in wenigstens einer Bohrung (67, 68) der Steckstift (14, 15) bzw. die Steckhülse für die Motorstromzuleitung (19, 20) geführt ist und daß durch andere Bohrungen (64, 65, 66) dieses Bauteils (60) die unlösbar am Deckel (12) festgelegten Steckstifte (16, 17, 18) bzw. Steckhülsen hindurchragen.

3. Elektromotor nach Anspruch 2, dadurch gekennzeichnet, daß das Bauteil (60) nebeneinander in zwei Reihen vorzugsweise jeweils drei Bohrungen (64, 65, 66 ; 67, 68, 69) aufweist, daß die unlösbar am Deckel (12) festgelegten Steckstifte (16, 17, 18) bzw. Steckhülsen alle die Bohrungen (64, 65, 66) in der ersten Reihe durchdringen und daß die Steckstifte (14, 15) bzw. Steckhülsen für die Motorstromzuleitungen (19, 20) alle in Bohrungen (67, 68, 69) der zweiten Reihe geführt sind.

4. Elektromotor nach wenigstens einem der vorhergehenden Ansprüche, dadurch gekennzeichnet, daß der Deckel des Getriebegehäuses aus Kunststoff gefertigt ist und daß wenigstens die Steckstifte bzw. Steckhülsen für die Schaltfedern beim Spritzvorgang des Deckels unlösbar daran fixiert werden.

5. Elektromotor nach wenigstens einem der Ansprüche 1 bis 4, dadurch gekennzeichnet, daß der Getriebegehäusedeckel (12) aus einer Metallplatine ausgestanzt ist, daß an dieser Metallplatine mehrere Isolierhülsen (32) festgelegt sind, die vorzugsweise jeweils eine Bohrung (33) in der Metallplatine auskleiden und daß in diese Isolierhülsen (32) die Steckstifte (16, 17) bzw. Steckhülsen mit einem Führungsabschnitt (45) eingesetzt sind.

6. Elektromotor nach Anspruch 5, dadurch gekennzeichnet, daß ein Steckstift (18) bzw. eine Steckhülse unmittelbar in einer Bohrung (50) der Metallplatine verankert ist und damit mit dieser Metallplatine elektrisch leitend verbunden ist.

7. Elektromotor nach Anspruch 5, dadurch gekennzeichnet, daß die Steckstifte (16, 17) bzw. Steckhülsen für die Schaltfedern (46, 46') zwischen einem Steckabschnitt (43) und dem die Isolierhülse (32) durchdringenden Führungsabschnitt (45) einen im Durchmesser vergrößerten Anschlagbund (44) aufweisen und daß die Schaltfedern (46, 46') an der freien Stirnfläche des Führungsabschnittes (45) radial abstehend befestigt, insbesondere vernietet sind.

8. Elektromotor nach wenigstens einem der Ansprüche 5 bis 7, dadurch gekennzeichnet, daß alle Isolierhülsen (32) einstückig mit einem Unterteil (37) eines Steckergehäuses an die Metallplatine angespritzt sind, daß dieses Unterteil (37) Rastelemente (35) aufweist und daß mittels dieser Rastelemente (35) das Bauteil (60) als Oberteil des Steckergehäuses im Abstand vom Deckel (12) an diesem verrastbar ist.

9. Elektromotor nach Anspruch 8, dadurch gekennzeichnet, daß der Steckstift (14, 15) bzw. die Steckhülse für die Motorstromzuleitung (19, 20) einen Anschlagbund (44) mit vergrößertem Durchmesser aufweist, der sich einerseits an dem Bauteil (60) und andererseits an einem Auflagesteg (38) am Unterteil (37) abstützt.

10. Elektromotor nach Anspruch 8, dadurch gekennzeichnet, daß in diesen Anschlagbund (44) quer zur Steckrichtung eine Bohrung (80) eingearbeitet ist und daß die Motorstromzuleitung (19, 20) in diese Bohrung (80) eingesteckt und dort verlötet ist.

11. Elektromotor nach wenigstens einem der Ansprüche 8 bis 10, dadurch gekennzeichnet, daß das Bauteil (60) kastenartig ausgebildet ist, daß die Grundfläche (61) die Bohrungen (64, 65, 66, 67, 68, 69) für die Steckstifte (14, 15, 16, 17, 18) bzw. Steckhülsen aufweist, daß zwei gegenüberliegende Seitenwände (70, 71) mit dem Unterteil (37) verrastet sind und daß die Motorstromzuleitung (19, 20) durch eine Aussparung (75) in einer Querwand (74) in das durch das Unterteil (37) und das Bauteil (60) gebildete Steckergehäuse eingeführt sind.

12. Elektromotor nach wenigstens einem der vorhergehenden Ansprüche, dadurch gekennzeichnet, daß der Getriebegehäusedeckel (12) im wesentlichen kreisrund mit einem rechteckigen Ansatz (13) ausgebildet ist und daß das Unterteil (37) wenigstens teilweise auch an den rechteckigen Ansatz (13) angespritzt ist.

13. Elektromotor nach Anspruch 12, dadurch gekennzeichnet, daß in dem Bereich des rechteckigen Ansatzes (13) die Steckstifte (14, 15) bzw. Steckhülse für die Motorstromzuleitung (19, 20) angeordnet sind.

14. Elektromotor nach wenigstens einem der vorhergehen Ansprüche, dadurch gekennzeichnet, daß das Bauteil (60) einen umlaufenden von der Grundfläche (61) abstehenden Kragen (77) als Führungsfläche für einen Gegenstecker aufweist.

**Claims**

1. An electric motor, especially a wiper motor for motor vehicles, comprising a gear housing (10) and a cap (12) covering said gear housing, on the outside of which are secured several plug contacts (14-18) for the connection of a counter plug, wherein various plug contacts undetachably fixed on the cap are connected with switch springs (46, 46') arranged within the gear housing and at least another plug contact is connected with a motor supply lead, characterised in that all plug contacts are formed as round pins (14, 15, 16, 17, 18) and/or receptacles, that said pins (14, 15, 16, 17, 18) and/or receptacles project at least substantially perpendicularly from the cap (12) and that the pin (14, 15) or the receptacle for the motor lead (19, 20) is guided on a structural member (60) which may be detachably secured on the outside of the cap (12).

2. An electric motor according to claim 1, characterised in that the structural member (60) has several bores (64, 65, 66, 67, 68, 69), that the pin (14, 15) and/or the receptacle for the motor supply lead (19, 20) is guided in at least one bore (67, 68) and that the pins (16, 17, 18) and or the receptacles undetachably secured on the cap (12) project through other bores (64, 65, 66) of the said structural member (60).

3. An electric motor according to claim 2, characterised in that in two adjacent rows the structural member (60) has preferably three bores (64, 65, 66 ; 67, 68, 69) each, that all pins (16, 17, 18) and/or the receptacles undetachably secured on the cap (12) penetrate the bores of the first row and that all pins (14, 15) and/or the receptacles for the motor supply leads (19, 20) are guided in bores (67, 68, 69) of the second row.

4. An electric motor accordin to at least any one of the preceding claims, characterised in that the cap of the gear housing is made of plastic material and that at least the pins and/or the receptacles for the switch springs are undetachably fixed on the cap during the injection moulding process.

5. An electric motor according to at least any one of claims 1 to 4, characterised in that the gear housing cap (12) is punched from a metal blank, that several insulating receptacles (32) are secured on this metal blank, which insulating receptacles preferably line on bore (33) in the metal blank each and that in these insulating receptacles (32) are inserted the pins (16, 17) and/or the receptacles with a guide portion (45).

6. An electric motor according to claim 5, characterised in that a pin (18) and/or a receptacle is directly anchored in a bore (50) of the metal blank and is thus connected with this metal blank in an electrically conductive manner.

7. An electric motor according to claim 5, characterised in that the pins (16, 17) and/or receptacles for the switch springs (46, 46′) have a stop collar (44) with a larger diameter between a plug portion (43) and the guide portion (45) penetrating the insulating receptacle (32) and that the switch springs (46, 46′) are secured, especially riveted, in a radially projecting way on the free front face of the guide portion (45).

8. An electric motor according to at least any one of claims 5 to 7, characterised in that all insulating receptacles (32) are injection-moulded on the metal blank integrally with a bottom (37) of a plug housing, that the said bottom (37) has locking elements (35) and that the structural member (60) as a top of the plug housing may be locked on the cap (12) at a spacing from it by means of the said locking elements (35).

9. An electric motor according to claim 8, characterised in that the pin (14, 15) and/or the receptacle for the motor supply lead (19, 20) has a stop collar (44) with enlarged diameter, which on the one hand is supported on the structural member (60) and on the other hand on a supporting web (38) of the bottom (37).

10. An electric motor according to claim 8, characterised in that transversely to the plug-in direction the said stop collar (44) is provided with a bore (80) and that the motor supply lead (19, 20) is inserted in this bore (80) and soldered there.

11. An electric motor according to at least any one of claims 8 to 10, characterised in that the structural member (60) is box-shaped, that the base (61) has bores (64, 65, 66, 67, 68, 69) for the pins (14, 15, 16, 17, 18) and/or the receptacles, that two opposite side walls (70, 71) are locked with the bottom (37) and that the motor supply lead (19, 20) is conducted into the plug housing formed by the bottom (37) and the structural member (60) through a recess (75) in a transverse wall (74).

12. An electric motor according to at least any one of the preceding claims, characterised in that the gear housing cap (12) is substantially circular with a rectangular stud (13) and that the bottom (37) is at least partially also injection-moulded on the rectangular stud (13).

13. An electric motor according to claim 12, characterised in that in the area of the rectangular stud (13) the pins (14, 15) and/or the receptacles for the motor supply lead (19, 20) are arranged.

14. An electric motor according to at least any one of the preceding claims, characterised in that the structural member (60) has a circumferential collar (77) projecting from the base (61) as a guide surface for a counter plug.

## Revendications

1. Moteur électrique, notamment moteur d'essuie-glace pour véhicules automobiles, comportant un carter (10) pour la transmission et un couvercle (12) fermant ce carter de la transmission et sur la face extérieure duquel font saillie plusieurs contacts à enfichage (14-18) servant au raccordement d'un connecteur antagoniste, et dans lequel des ressorts de commutation (46, 46′) sont fixés à l'intérieur du carter de la transmission, sur des contacts individuels à enfichage, fixés de façon imperdable sur le couvercle, et au moins un autre contact à enfichage est relié à la ligne d'alimentation en courant du moteur, caractérisé en ce que tous les contacts à enfichage sont réalisés sous la forme de broches enfichables (14, 15, 16, 17, 18) ou de douilles à enfichage, que ces broches enfichables (14, 15, 16, 17, 18) ou ces douilles à enfichage font saille au moins approximativement perpendiculairement au couvercle (12), et que la broche enfichable (14, 15) ou la douille à enfichage pour la ligne (19, 20) d'alimentation en courant du moteur est guidée sur un composant (60), qui peut être fixé de façon détachable sur la face extérieure du couvercle (12).

2. Moteur électrique suivant la revendication 1, caractérisé par le fait que le composant (60) comporte plusieurs perçages (64, 65, 66, 67, 68, 69), que la broche enfichable (14, 15) ou la douille à enfichage pour la ligne (19, 20) d'alimentation en courant du moteur est guidée dans au moins un perçage (67, 68), et que les broches enfichables (16, 17, 18) ou les douilles à enfichage, fixées de façon imperdable sur le couvercle (12), s'étendent à travers d'autres perçages (64, 65, 66) de ce composant (60).

3. Moteur électrique selon la revendication 2, caractérisé en ce que le composant (60) comporte de préférence trois perçages respectifs (64, 65, 66 ; 67, 68, 69) disposés côte-à-côte suivant deux rangées, que les broches enfichables (16, 17, 18) ou les douilles à enfichage, fixées de façon imperdable sur le couvercle (12), traversent toutes les perçages (64, 65, 66) de la première rangée, et que les broches enfichables (14, 15) ou les douilles à enfichage pour les lignes (19, 20) d'alimentation en courant du moteur s'étendent toutes dans des perçages (67, 68, 69) de la seconde rangée.

4. Moteur électrique selon au moins l'une des revendications précédentes, caractérisé en ce que le couvercle du carter de la transmission est réalisé en matière plastique et qu'au moins les broches enfichables et les douilles à enfichage pour les ressorts de commutation y sont fixées de façon imperdable lors de l'opération de moulage par injection du couvercle.

5. Moteur électrique selon au moins l'une des revendications 1 à 4, caractérisé en ce que le couvercle (12) du carter de la transmission est découpé dans une platine métallique, que plusieurs douilles isolantes (32), qui habillent de préférence des perçages respectifs (33) dans la platine métallique, sont fixées à cette dernière, et que les broches enfichables (16, 17) ou les douilles à enfichage sont insérées, par une section de guidage (45), dans ces douilles isolantes (32).

6. Moteur électrique selon la revendication 5, caractérisé en ce qu'une broche enfichable (18) ou une douille à enfichage est ancrée directement dans un perçage (5) de la platine métallique et par conséquent est reliée de façon électriquement conductrice à cette platine métallique.

7. Moteur électrique selon la revendication 5, caractérisé en ce que les broches enfichables (16, 17) ou les douilles à enfichage pour les ressorts de commutation (46, 46') comportent, entre une section enfichable (43) et la section de guidage (45) traversant la douille isolante (32), un collet de butée (44) de diamètre accru, et que les ressorts de commutation (46, 46') sont fixés, notamment par rivetage, de manière à faire saillie radialement sur la surface frontale libre de la section de guidage (45).

8. Moteur électrique selon au moins l'une des revendications 5 à 7, caractérisé en ce que toutes les douilles isolantes (32) sont formées par moulage par injection, d'un seul tenant avec une partie inférieure (37) d'un boîtier de connecteur, sur la platine métallique, que cette partie inférieure (37) comporte des organes d'encliquetage (35) et qu'au moyen de ces organes d'encliquetage (35), le composant (60) peut, en tant que partie supérieure du boîtier de connecteur, être verrouillé par encliquetage sur le couvercle (12), à distance de ce dernier.

9. Moteur électrique selon la revendication 8, caractérisé en ce que la broche enfichable (14, 15) ou la douille à enfichage pour la ligne (19, 20) d'alimentation en courant du moteur comporte un collet de butée (44) de diamètre accru, qui prend appui d'une part sur le composant (60) et d'autre part sur une barrette d'appui (38) présente sur la partie inférieure (37).

10. Moteur électrique selon la revendication 8, caractérisé en ce qu'un perçage (80) est formé par usinage dans ce collet de butée (44) transversalement par rapport à la direction d'enfichage, et que la ligne (19, 20) d'alimentation en courant du moteur est enfichée dans ce perçage (80) et y est fixée par brasage.

11. Moteur électrique selon au moins l'une des revendications 8 à 10, caractérisé en ce que le composant (60) est réalisé en forme de boîte, que la surface de base (61) comporte les perçages (64, 65, 66, 67, 68, 69) pour les broches enfichables (14, 15, 16, 17, 18) ou pour les douilles à enfichage, que deux parois latérales (70, 71) disposées en vis-à-vis sont verrouillées par encliquetage sur la partie inférieure (37), et que la ligne (19, 20) d'alimentation en courant du moteur pénètre par un évidement (75) ménagé dans une paroi transversale (74), dans le boîtier de connecteur formé par la partie inférieure (37) et le composant (60).

12. Moteur électrique selon au moins l'une des revendications précédentes, caractérisé en ce que le couvercle (12) du carter du moteur possède une forme sensiblement circulaire avec une partie saillante rectangulaire (13) et que la partie inférieure (37) est formée par moulage par injection au moins en partie également sur la partie saillante rectangulaire (13).

13. Moteur électrique selon la revendication 12, caractérisé en ce que les broches enfichables (14, 15) ou les douilles à enfichage pour la ligne (19, 20) d'alimentation en courant du moteur, sont disposées dans la zone de la partie saillante rectangulaire (13).

14. Moteur électrique selon au moins l'une des revendications précédentes, caractérisé en ce que le composant (60) comporte un collet périphérique (77), qui fait saillie à partir de la surface de base (61), en tant que surface de guidage pour un connecteur antagoniste.

Fig. 1

# Fig. 2

# Fig. 4

# Fig. 3

## Fig. 5

12

13

36

46'

36

36

46

46''

31

96

## Fig. 6

61

73

69

66

68

77

65

67

70

76

64

71

60

72

72

75   74